# EUROPÄISCHE PATENTSCHRIFT

(11) **EP 0 986 520 B1**
(45) Veröffentlichungstag und Bekanntmachung des Hinweises auf die Patenterteilung: **14.08.2002**
(21) Anmeldenummer: 98924283.9
(22) Anmeldetag: 06.05.1998
(51) Int. Cl.: C02F 11/00

(54) **SILO FÜR SCHLÄMME**
SLUDGE SILO
SILO A BOUES

(30) Priorität: 03.06.1997 DE 19723150
(43) Veröffentlichungstag der Anmeldung: 22.03.2000
(73) Patentinhaber: PUTZMEISTER Aktiengesellschaft, 72631 Aichtal (DE)
(72) Erfinder: ZEY, Wolfgang, D-72800 Eningen (DE); SCHMID, Alexander, D-76593 Gernsbach (DE)
(74) Vertreter: Wolf, Eckhard, Dr.-Ing.
(86) Internationale Anmeldenummer: EP9802658
(87) Internationale Veröffentlichungsnummer: WO9855410

(56) Entgegenhaltungen:
- EP-A- 0 379 121
- DE-A- 3 727 096

## Beschreibung

Die Erfindung betrifft ein Silo für Schlämme, insbesondere Klärschlämme, mit einem Schlammaufnahmeteil und mit einer oberhalb des Schlammaufnahmeteils angeordneten, über eine großflächige Einlaßöffnung mit diesem kommunizierenden Beschickungspartie und mit einer im unteren Bereich des Schlammaufnahmeteils angeordneten, vorzugsweise an ein Rohrleitungssystem anschließbaren Schlammaustragvorrichtung.

Die in einem Silo der genannten Art zwischengelagerten Schlämme werden meist vom Silo aus über Rohrleitungssysteme zu einem Bestimmungsort, beispielsweise zu einer Verbrennungsanlage transportiert. Um zu vermeiden, daß mit dem Schlamm mitgeführte Fremdkörper in die Rohrleitungen gelangen und diese an undefinierten Stellen verstopfen können, ist es bekannt, an bestimmten Stellen des Rohrleitungssystems Einbausiebe vorzusehen, die je nach Siebgröße Fremdkörper zurückhalten können. Um ein Zusetzen der Siebe zu vermeiden, müssen diese in relativ kurzen Zeitintervallen entfernt und gereinigt werden.

Ausgehend hiervon liegt der Erfindung die Aufgabe zugrunde, Vorkehrungen an einem Silo für Schlämme und Klärschlämme zu treffen, die den Einbau von wartungsintensiven Siebeinrichtungen in nachgeordneten Rohrleitungssystemen und Anlagen entbehrlich machen.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den Unteransprüchen.

Die erfindungsgemäße Lösung geht von dem Gedanken aus, daß mit einer in der Beschickungspartie des Silos angeordneten Abscheidevorrichtung für im Schlamm mitgeführte Fremdkörper der über die Schlammaustragsvorrichtung am Silo abgezogene Schlamm für den störungsfreien Weitertransport über ein Rohrleitungssystem besser konditioniert werden kann. Da bei Schlämmen, wie Klärschlämmen mit einem Feststoffanteil von bis zu 70 % die Fremdkörper in den Schlamm eingebettet sind und rein siebtechnisch nicht vom Schlamm getrennt werden können, wird gemäß einer bevorzugten Ausgestaltung der Erfindung vorgeschlagen, daß die Fremdkörperabscheidevorrichtung einen die Einlaßöffnung übergreifenden Siebrost und mindestens eine oberhalb des Siebrosts angeordnete Gegenfläche aufweist, die unter Durchdrücken von Schlamm durch den Siebrost relativ zueinander bewegbar sind. Die teilweise noch mit Restschlamm verunreinigten Fremdkörper werden vom Siebrost zurückgehalten und können entweder von Hand oder mechanisch entfernt werden, bevor die nächste Schlammcharge in die Beschickungspartie eingebracht wird. Hierzu ist es zweckmäßig, wenn die Fremdkörperabscheidevorrichtung mindestens einen auf der dem Schlammaufnahmeteil abgewandten Seite des Siebrosts angeordneten Fremdkörperauslaß aufweist.

Gemäß einer weiteren bevorzugten Ausgestaltung der Erfindung weist die Festkörperabscheidevorrichtung einen durch hochgezogene Seitenwände begrenzten, mit Schlamm beschickbaren Beschickungsrahmen auf, der so zwischen dem Siebrost und der Gegenfläche positioniert oder positionierbar ist, daß der Siebrost und/oder die Gegenfläche quer zur Rahmenöffnung relativ zueinander verschiebbar sind. Eine erste Ausführungsvariante sieht hierbei vor, daß die Gegenfläche durch die Innenfläche eines die Beschickungspartie übergreifenden Silodeckels gebildet ist und daß der Siebrost mittels eines vorzugsweise hydraulischen Antriebs durch den silofest angeordneten Beschickungsrahmen hindurch in Richtung Silodeckel verschiebbar ist. Um die mit Restschlamm verunreinigten Fremdkörper vom Siebrost entfernen zu können, kann in diesem Fall ein parallel zur Oberfläche des Siebrosts in Richtung Fremdkörperauslaß verschiebbarer Räumschieber oder Rechen vorgesehen werden, der motorisch oder hydraulisch angetrieben werden kann, wenn der Siebrost sich in seiner gegen die Gegenfläche verschobenen Endstellung befindet.

Gemäß einer abgewandelten Ausführungsvariante ist ein die Einlaßöffnung silofest überspannender Siebrost vorgesehen, während die Gegenfläche an einer Druckplatte angeordnet ist, die mittels eines vorzugsweise hydraulischen Antriebs durch den Beschickungsrahmen hindurch von oben in Richtung Siebrost verschiebbar ist. Bei dieser Ausführungsvariante ist zweckmäßig ein relativ zur Beschickungspartie und zum Siebrost verschiebbarer, nach oben und unten offener Beschickungsrahmen vorgesehen, der in einer neben dem Siebrost befindlichen Füllstation auf einer mit dem Siebrost fluchtenden Unterlage mit Schlamm beschickbar und von dort in Richtung Siebrost verschiebbar ist. Für den Abtransport der mit Restschlamm verunreinigten Fremdkörper kann der Beschickungsrahmen bei angehobener Druckplatte relativ zum Siebrost in Richtung Fremdkörperauslaß verschoben werden. Der Fremdkörperauslaß weist in diesem Fall zweckmäßig eine an ihrem Rand mit dem Siebrost fluchtende Auslaßöffnung auf, über die der bodenseitig offene Beschickungsrahmen hinweg unter Austrag der Fremdkörper verschiebbar ist.

Der hydraulische Antrieb des Siebrosts bzw. der Druckplatte erfolgt bevorzugt durch vier gleichzeitig betätigbare, im Eckbereich des Siebrosts bzw. der Druckplatte angreifende Hydrozylinder. Je nach Anwendungsfall können auch mehr oder weniger Hydrozylinder als Antriebsaggregate eingesetzt werden.

Eine weitere vorteilhafte Ausgestaltung der Erfindung sieht vor, daß die Gegenfläche durch eine schräg in Richtung Siebrost weisende Abstreiffläche mindestens eines federnd gegen den Siebrost anliegenden Abstreifers gebildet ist, wobei der Siebrost und der Abstreifer parallel zur Oberfläche des Siebrosts relativ zueinander bewegbar sind. Vorteilhafterweise ist dabei der Siebrost gegenüber dem mindestens einen, silofest angeordneten Abstreifer um seine Mittelachse verdrehbar. Um große Fremdkörper leichter zum Fremdkörperauslaß transportieren zu können, ist gemäß einer vorteilhaften Ausgestaltung der Erfindung zusätzlich mindestens ein in lichtem Abstand über dem Siebrost angeordneter, radial ausgerichteter Anschlagbalken für derartige Fremdkörper vorgesehen, der zugleich als Montagebalken für die Abstreifer fungieren kann. Vorteilhafterweise sind zwei durch den Drehmittelpunkt des Siebrosts voneinander getrennte Abstreifergruppen vorgesehen, die dafür sorgen, daß der auf dem rotierenden Siebrost befindliche Schlamm in der richtigen Richtung federnd abgestreift und dabei durch den Siebrost hindurchgedrückt wird. Der rotierende Siebrost ist zweckmäßig von einem silofesten Mantel umgeben, der mindestens eine den Fremdkörperauslaß bildende Öffnung aufweist, die zur Steuerung eines chargenweisen Fremdkörperaustrags zweckmäßig verschließbar ausgebildet ist.

Der Fremdkörperauslaß kann bei allen vorstehend beschriebenen Ausführungsvarianten in eine Fremdkörperkammer münden, die zur Reinigung der Fremdkörper von ihrem Restschlamm mit Wasser beaufschlagbar und über eine Restschlamm-Förderstrecke mit dem Schlammaufnahmeteil des Silos verbunden sein kann.

Im folgenden wird die Erfindung anhand der in der Zeichnung in schematischer Weise dargestellten Ausführungsbeispiele näher erläutert. Es zeigen
- Fig. 1a und b: die Beschickungspartie eines Silos für Klärschlämme bei geschlossenem Silodeckel und abgesenktem Siebrost in einem Vertikalschnitt und in Draufsicht;
- Fig. 1c und d: die Beschickungspartie des Silos in Darstellungen entsprechend Fig. 1a und b bei geöffnetem Silodeckel, angehobenem Siebrost und teilweise vorgeschobenem Räumschieber;
- Fig. 2a und b: die Beschickungspartie eines gegenüber Fig. 1 abgewandelten Ausführungsbeispiels eines Silos mit silofestem Siebrost, vertikal verschiebbarer Druckplatte und seitlich verschiebbarem Beschickungsrahmen in einer teilweise geschnittenen Seitenansicht und einer Draufsicht;
- Fig. 3a und b: die Beschickungspartie eines weiteren abgewandelten Ausführungsbeispiels eines Klärschlamm-Silos mit rotierendem Siebrost und Abstreifern in einem Vertikalschnitt und einer Draufsicht.

Die in der Zeichnung ausschnittsweise dargestellten Silos sind zur Zwischenlagerung von Klärschlamm mit einem Feststoffanteil von bis zu 70 % bestimmt. Die Silos 10 bestehen im wesentlichen aus einem Schlammaufnahmeteil 12, einer oberhalb des Schlammaufnahmeteils angeordneten, über eine großflächige Einlaßöffnung 14 mit diesem kommunizierenden Beschickungspartie 16, einer im unteren Bereich des Schlammaufnahmeteils 12 angeordneten, nicht dargestellten Schlammaustragvorrichtung und einer auf der Höhe der Beschickungspartie 16 angeordneten Abscheidevorrichtung 18 für mit dem zugeführten Schlamm eingetragene Fremdkörper. In dem Schlamm enthaltene Fremdkörper, wie Schrauben, Steine und dergleichen, können in dem Silo nachgeschalteten Rohrleitungssystemen, sowie Anlagen, wie Mischtrommeln, Trockner oder Verbrennungsanlagen zu Störungen führen, die mit der Abscheidevorrichtung 18 vermieden werden.

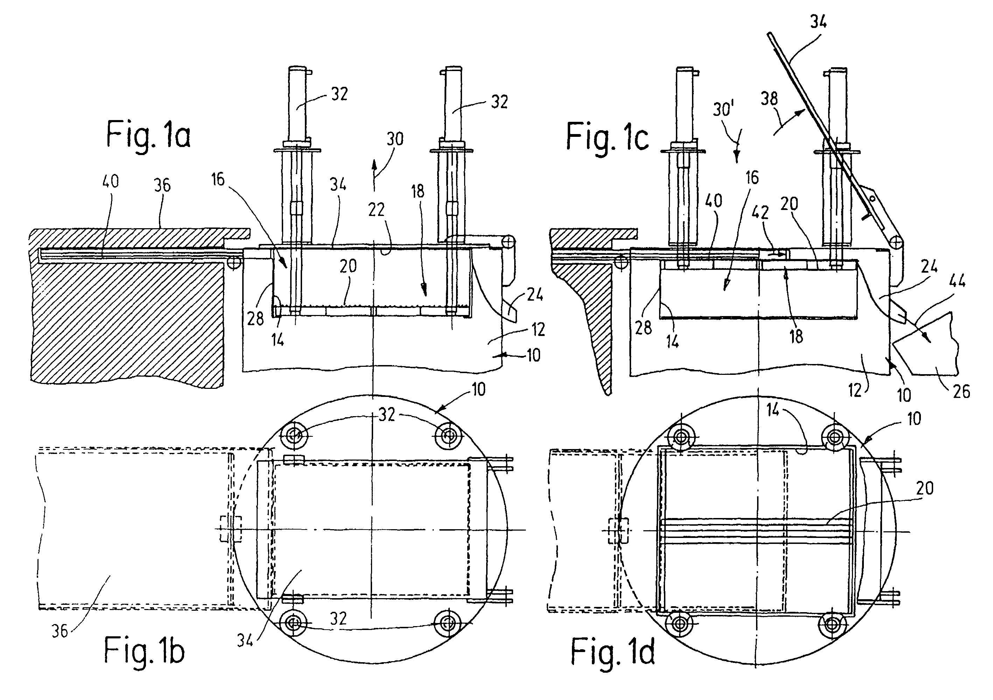

Die in den drei Ausführungsvarianten nach Fig. 1, 2 und 3 gezeigten Fremdkörperabscheidevorrichtungen 18 weisen übereinstimmend einen die großflächige Einlaßöffnung 14 übergreifenden steifen Siebrost 20 und mindestens eine oberhalb des Siebrosts angeordnete Gegenfläche 22 auf, die unter Durchdrücken von Schlamm durch die Öffnungen des Siebrosts 20 relativ zueinander bewegbar sind. Die drei Ausführungsvarianten weisen ferner übereinstimmend einen auf der dem Schlammaufnahmeteil 12 abgewandten Seite des Siebrosts 20 angeordneten Fremdkörperauslaß 24 auf, über den die nach dem Durchdrücken des Schlamms durch den Siebrost auf dessen Oberseite verbleibenden, mit Restschlamm verschmutzten Fremdkörper beispielsweise in eine außen liegende Fremdkörperkammer 26 entfernt werden können. Zur Reinigung der Fremdkörper vom Restschlamm kann die Fremdkörperkammer mit Wasser beaufschlagt und der dabei entstehende Restschlamm in den Schlammaufnahmeteil 12 des Silos zurückgefördert werden.

Bei dem in Fig. 1 gezeigten Ausführungsbeispiel weist die Abscheidevorrichtung 18 einen durch hochgezogene Seitenwände begrenzten, silofesten Beschickungsrahmen 28 auf, in welchem der Siebrost 20 in Richtung der Pfeile 30',30'' mit Hilfe der vier Hydraulikzylinder 32 heb- und senkbar ist. Die Gegenfläche 22 ist dort durch die Innenfläche des Silodeckels 34 in dessen geschlossenem Zustand (Fig. 1a und b) gebildet. Das Befüllen der Beschickungspartie 16 mit Klärschlamm erfolgt über einen nicht dargestellten LKW von der Rampe 36 aus bei abgesenktem Siebrost 20 und geöffnetem Silodeckel 34. Die Beschickungspartie 16 ist so dimensioniert, daß sie gerade eine LKW-Ladung Klärschlamm aufnehmen kann. Nach dem Beschickungsvorgang wird der Silodeckel 34 in die in Fig. 1a und b gezeigte Schließstellung gebracht und der Siebrost 20 anschließend in Richtung des Pfeils 30' mit Hilfe der Hydrozylinder 32 in Richtung Gegenfläche 22 verschoben. Dabei werden die kleinteiligen oder pastösen Schlammanteile durch die Öffnungen des Siebrosts 20 hindurch in den Schlammaufnahmeteil 12 gedrückt, während die im Schlamm enthaltenden größeren Fremdkörper auf der Oberseite des Siebrosts 20 verbleiben. Nach Erreichen der oberen Endstellung des Siebrosts 20 (Fig. 1c und d) wird der Silodeckel 34 in Richtung des Pfeils 38 mit hydraulischen Mitteln geöffnet, so daß die auf dem Siebrost 20 befindlichen Fremdkörper von außen her zugänglich sind. Sie können von dort entweder manuell oder mit Hilfe eines motorisch angetriebenen Räumschiebers 40 in Richtung der Pfeile 42,44 zum Festkörperauslaß 24 und zur Festkörperkammer 26 ausgetragen werden. Nach Zurückziehen des Räumschiebers 40 und Absenken des Siebrosts 20 in seine untere Endstellung ist die Beschickungspartie 16 frei für eine weitere Schlammcharge.

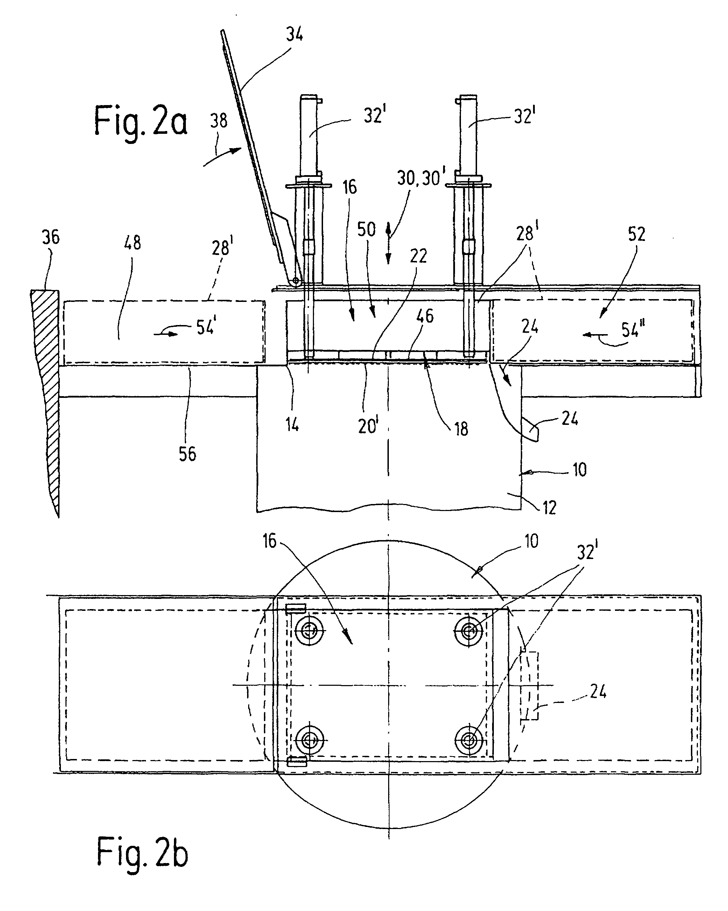

Bei dem in Fig. 2a und b gezeigten Ausführungsbeispiel weist die Abscheidevorrichtung 18 einen silofesten Siebrost 20' auf, während die Gegenfläche 22 an einem über die Hydrozylinder 32' in Richtung des Doppelpfeils 30',30'' auf- und abverschiebbaren Druckplatte 46 angeordnet ist. Weiter ist dort ein Beschickungsrahmen 28' vorgesehen, der im Bereich der Beschickungspartie 16 seitlich gegenüber dem Silo 10 von einer Füllstation 48 in eine Preßstation 50 und von dort in eine Abscheidestation 52 in Richtung der Pfeile 54',54'' verschiebbar ist. In der Füllstation 48 steht der nach oben und unten offene Beschickungsrahmen auf einer mit dem Siebrost 20' fluchtenden ebenen Unterlage 56 auf und kann von der Rampe 36 aus über einen LKW mit Klärschlamm befüllt werden. Der volle Beschickungsrahmen 28' wird sodann in Richtung des Pfeils 54' bei angehobener Druckplatte 46 in die Preßstation 50 geschoben. Dort wird der Schlamm unter Verschiebung der Druckplatte 46 mit Hilfe der Hydrozylinder in Richtung des Pfeils 30' durch den Siebrost 20' gepreßt, bis nur noch die mit Restschlamm verschmutzten Fremdkörper auf dem Siebrost verbleiben. Nach Ausheben der Druckplatte 46 aus dem Beschickungsrahmen 28' kann dieser unter Mitnahme der Fremdkörper in Richtung Abscheidestation 52 verschoben werden. Dabei gelangen die mitgenommenen Fremdkörper über den Fremdkörperauslaß 24 nach außen. Nach Rücktransport des Beschickungsrahmens 28' von der Abscheidestation in die Füllstation kann eine weitere Charge Schlamm eingebracht werden.

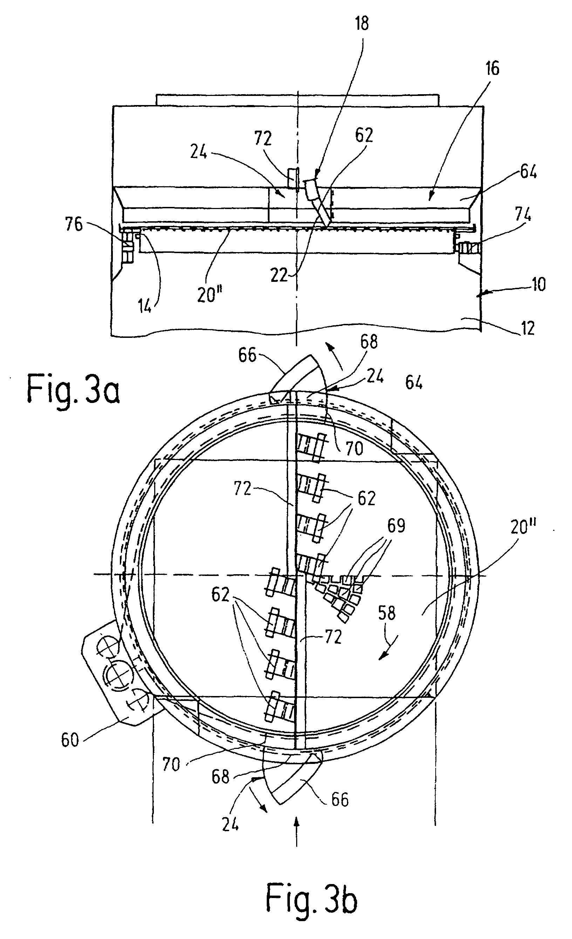

Bei der in Fig. 3a und b gezeigten Ausführungsvariante weist die Abscheidevorrichtung 18 einen in Richtung des Pfeils 58 mittels des Drehantriebs 60 rotierenden Siebrost 20'' auf, während die Gegenflächen 22 durch die schräg in Richtung Siebrost weisenden Abstreifflächen der federnd gegen den Siebrost 20'' anliegenden Abstreifer 62 gebildet sind. Der Siebrost 20'' ist am Silo radial über Radialführungsrollen 74 und axial über Axialführungsrollen 76 gelagert, von denen jeweils mehrere über den Umfang verteilt am Silomantel angeordnet sind. Der Siebrost 20'' ist von einem silofesten Mantel 64 umgeben, der zwei einander diametral gegenüberliegende, je einen Fremdkörperauslaß 24 bildende, mit einer Klappe 66 verschließbare Radialöffnungen 68 aufweist. Die auf der Oberfläche des Siebrosts 20'' verbleibenden, nicht durch die Sieböffnungen 69 des Siebrosts 20'' hindurchpassenden Fremdkörper gelangen unter der Einwirkung der Zentrifugalkraft allmählich radial nach außen und werden dort von einem Fremdkörperfänger 70 angehalten und bei geöffneten Klappen 66 in den Fremdkörperauslaß 24 geleitet. Weiter sind dort zwei in lichtem Abstand über dem Siebrost 20'' silofest angeordnete radial ausgerichtete Anschlagbalken 72 vorgesehen, durch die bei drehendem Siebrost 20'' größere Fremdkörper angehalten und radial nach außen geleitet werden. Die Anschlagbalken 72 dienen zugleich als Halter für die Abstreifer 62.

Zusammenfassend ist folgendes festzustellen: Die Erfindung bezieht sich auf ein Silo für Schlämme, insbesondere für Klärschlämme, mit einem Schlammaufnahmeteil 12, mit einer oberhalb des Schlammaufnahmeteils angeordneten, über eine Einlaßöffnung 14 mit diesem kommunizierenden Beschickungspartie 16 und mit einer im unteren Bereich des Schlammaufnahmeteils angeordneten, vorzugsweise mit einem Rohrleitungssystem verbindbaren Schlammaustragvorrichtung. Um eine störungsfreie Weiterverwendung der im Silo zwischengespeicherten Schlämme zu gewährleisten, wird gemäß der Erfindung vorgeschlagen, daß im Bereich der Beschickungspartie 16 eine Abscheidevorrichtung 18 für Fremdkörper angeordnet ist. Die Fremdkörperabscheidevorrichtung 18 weist zweckmäßig einen die Einlaßöffnung 14 übergreifenden Siebrost und mindestens eine oberhalb des Siebrosts 20 angeordnete Gegenfläche 22 auf, die unter Durchdrücken von Schlamm durch die Sieböffnungen des Siebrosts 20 relativ zueinander bewegbar sind.

## Patentansprüche

1. Silo für Schlämme, insbesondere Klärschlämme, mit einem Schlammaufnahmeteil (12), mit einer oberhalb des Schlammaufnahmeteils (12) angeordneten über eine großflächige Einlaßöffnung (14) mit diesem kommunizierenden Beschikkungspartie (16), mit einer im unteren Bereich des Schlammaufnahmeteils (12) angeordneten, vorzugsweise an ein Rohrleitungssystem anschließbaren Schlammaustragvorrichtung und mit einer einlaßseitig angeordneten Abscheidevorrichtung (18) für Fremdkörper, **dadurch gekennzeichnet, daß** die Fremdkörperabscheidevorrichtung (18) in der Beschickungspartie (16) angeordnet ist.

2. Silo nach Anspruch 1, **dadurch gekennzeichnet, daß** die Fremdkörperabscheidevorrichtung (18) einen die Einlaßöffnung (14) übergreifenden Siebrost (20,20',20") und mindestens eine oberhalb des Siebrosts angeordnete Gegenfläche (22) aufweist, die unter Durchdrücken von Schlamm durch Sieböffnungen des Siebrosts relativ zueinander bewegbar sind.

3. Silo nach Anspruch 2, **dadurch gekennzeichnet, daß** die Fremdkörperabscheidevorrichtung (18) mindestens einen auf der dem Schlammaufnahmeteil (12) abgewandten Seite des Siebrosts (20,20',20") angeordneten Fremdkörperauslaß (24) aufweist.

4. Silo nach Anspruch 2 oder 3, **dadurch gekennzeichnet, daß** die Fremdkörperabscheidevorrichtung (18) einen durch hochgezogene Seitenwände begrenzten, mit Schlamm beschickbaren Beschickungsrahmen (28, 28') aufweist, der so zwischen dem Siebrost (20, 20') und der Gegenfläche (22) positioniert oder positionierbar ist, daß der Siebrost und die Gegenfläche quer zur Rahmenöffnung relativ zueinander verschiebbar sind.

5. Silo nach Anspruch 4, **dadurch gekennzeichnet, daß** die Gegenfläche (22) durch die Innenfläche eines die Beschickungspartie (16) übergreifenden Silodeckels (34) gebildet ist, und daß der Siebrost (20) mittels eines vorzugsweise hydraulischen Antriebs (32) durch den silofest angeordneten Beschickungsrahmen (28) hindurch in Richtung Silodeckel (34) verschiebbar ist.

6. Silo nach Anspruch 4 oder 5, **dadurch gekennzeichnet, daß** die Fremdkörperabscheidevorrichtung (18) einen parallel zur Oberfläche des Siebrosts (20) in Richtung Fremdkörperauslaß verschiebbaren Räumschieber (40) aufweist.

7. Silo nach einem der Ansprüche 2 bis 4, **dadurch gekennzeichnet, daß** der Siebrost (20') die Einlaßöffnung (14) silofest überspannt, und daß die Gegenfläche (22) an einer Druckplatte (46) angeordnet ist, die mittels eines vorzugsweise hydraulischen Antriebs (32') durch den Beschickungsrahmen (28') hindurch von oben in Richtung Siebrost (20') verschiebbar ist.

8. Silo nach Anspruch 7, **dadurch gekennzeichnet, daß** der nach oben und unten offene Beschickungsrahmen (28') in einer neben dem Siebrost (20') befindlichen Füllstation (48) auf einer mit dem Siebrost (20') fluchtenden Unterlage (56) mit Schlamm beschickbar und von dort in Richtung Siebrost (20') verschiebbar ist.

9. Silo nach Anspruch 7 oder 8, **dadurch gekennzeichnet, daß** der Beschickungsrahmen (28') bei angehobener Druckplatte (46) relativ zum Siebrost (20') in Richtung Fremdkörperauslaß (24) verschiebbar ist.

10. Silo nach Anspruch 9, **dadurch gekennzeichnet, daß** der Fremdkörperauslaß (24) eine an ihrem Rand mit dem Siebrost (20') fluchtende Auslaßöffnung aufweist, über die der bodenseitig offene Beschickungsrahmen (28') hinweg verschiebbar ist.

11. Silo nach einem der Ansprüche 5 bis 10, **dadurch gekennzeichnet, daß** der hydraulische Antrieb vier gleichzeitig betätigbare, im Eckbereich des Siebrosts (20) bzw. der Druckplatte (46) angreifende Hydrozylinder (32,32') aufweist.

12. Silo nach einem der Ansprüche 1 bis 3, **dadurch gekennzeichnet, daß** die Gegenfläche (22) durch eine schräg in Richtung Siebrost (20'') weisende Abstreiffläche mindestens eines federnd gegen den Siebrost (20'') anliegenden Abstreifers (62) gebildet ist, und daß der Siebrost und der Abstreifer parallel zur Oberfläche des Siebrosts relativ zueinander bewegbar sind.

13. Silo nach Anspruch 12, **dadurch gekennzeichnet, daß** der Siebrost (20'') gegenüber dem mindestens einen silofest angeordneten Abstreifer (62) verdrehbar ist.

14. Silo nach Anspruch 12 oder 13, **dadurch gekennzeichnet, daß** mindestens ein in lichtem Abstand über dem Siebrost (20'') angeordneter, radial ausgerichteter Anschlagbalken (72) vorgesehen ist.

15. Silo nach einem der Ansprüche 12 bis 14, **dadurch gekennzeichnet, daß** der Siebrost (20'') von einem silofesten Mantel (64) umgeben ist, der mindestens eine den Fremdkörperauslaß (24) bildende, vorzugsweise verschließbare Öffnung aufweist.

16. Silo nach einem der Ansprüche 2 bis 15, **dadurch gekennzeichnet, daß** der Fremdkörperauslaß (24) in eine Fremdkörperkammer (26) mündet.

17. Silo nach Anspruch 16, **dadurch gekennzeichnet, daß** die Fremdkörperkammer (26) mit Wasser zur Reinigung der Fremdkörper von Restschlamm beaufschlagbar und über eine Restschlammförderstrecke mit dem Schlammaufnahmeteil (12) verbunden ist.

## Claims

1. Silo for sludges, in particular sewage sludges, with a sludge-receiving part (12), with a feeding part (16) positioned above the sludge-receiving part (12) and in communication therewith via a large surface area inlet opening (14), and with a sludge outlet located in the lower area of the sludge receiving part (12), preferably connected to a pipeline system, and with a separating device (18) for separating foreign bodies from sludge provided at the inlet side, thereby characterized, that said separating device (18) is provided in the feeding part (16).

2. Silo according to claim 1, thereby characterized, that the foreign-body separating device (18) includes a sieve-grate (20, 20', 20'') positioned above the inlet opening (14) and at least one counter-surface (22) positioned above the sieve-grate, said sieve grate and counter-surface pushing sludge through the sieve openings of the sieve-grate while moving relative to each other.

3. Silo according to claim 2, thereby characterized, that the foreign body separating device (18) includes at least one foreign body outlet (24) provided or oriented on the side of the sieve-grate (20, 20', 20'') opposite to the sludge-receiving part (12).

4. Silo according to claim 2 or 3, thereby characterized, that the foreign body separating device (18) includes a feed frame (28, 28') supplyable with sludge and bordered by a raised sidewall, which is so positioned or positionable between the sieve-grate (20, 20') and the counter-surface (22), that the sieve-grate and the counter-surface are moveable relative to each other perpendicular to the frame opening.

5. Silo according to claim 4, thereby characterized, that the counter-surface (22) is formed by an inner surface of a silo lid (34) covering the feed part (16), and that the sieve-grate (20) is displaceable through the feed frame (28), which is provided fixed to the silo, in the direction of the silo lid (34) by means of a preferably hydraulic drive (32).

6. Silo according to claim 4 or 5, thereby characterized, that the foreign body separating device (18) comprises a wiper (40) moveable parallel to the upper surface of the sieve-grate (20) in the direction of the foreign body outlet.

7. Silo according to one of claims 2-4, thereby characterized, that the sieve-grate (20') extends fixed to the silo over the inlet opening (14) in that the counter-surface (22) is a pressure plate (46) which is displaceable by means of a preferably hydraulic drive (32') through the feed frame (28') from above in the direction of the sieve-grate (20').

8. Silo according to claim 7, thereby characterized, that the feed frame (28') is open towards above and below, is displaceable to a fill station (48) situated on a base (56) next to the sieve-grate (20') and aligned with the sieve-grate (20'), and at said fill station is fillable with sludge and from there is slideable in the direction of the sieve-grate (20').

9. Silo according to claim 7 or 8, thereby characterized, that the feed frame (28') is slideable relative to the sieve-grate (20') in the direction of the foreign body outlet (24) when the pressure plate is raised (46).

10. Silo according to claim 9, thereby characterized, that the foreign body outlet (24) includes an outlet opening adjacent the sieve-grate (20'), through which the feed frame (28'), which is open on the bottom side, is slideable.

11. Silo according to one of claims 5-10, thereby characterized, that the hydraulic drive has four simultaneously operable hydraulic cylinders (32, 32') engaging in the edge area of the sieve-grate (20) or, as the case may be, the pressure plate (46).

12. Silo according to one of claims 1-3, thereby characterized, that the counter-surface (22) is formed by a wiper surface of at least one wiper (62) lying spring-biased against the sieve-grate (20''), said surface oriented diagonal to the direction of the sieve-grate (20''), and wherein the sieve-grate and the wiper are moveable relative to each other parallel to the upper surface of the sieve-grate.

13. Silo according to claim 12, thereby characterized, that the sieve-grate (20'') is rotateable with respect to the at least one silo-fixed wiper (62).

14. Silo according to claim 12 or 13, thereby characterized, that at least one radially oriented abutment wall or surface (72) is provided in close proximity above the sieve-grate (20'').

15. Silo according to one of claims 12-14, thereby characterized, that the sieve-grate (20'') is surrounded by a silo-fixed jacket (64), which jacket includes at least a preferably closeable opening which forms the foreign body outlet (24).

16. Silo according to one of claims 2-5, thereby characterized, that the foreign body outlet (24) opens into a foreign body chamber (26).

17. Silo according to claim 16, thereby characterized, that the foreign body chamber (26) can be acted upon by water for cleansing of sewage sludge from the foreign bodies, and is connected via a sewage sludge conveyor part with the sludge-receiving part (12).

## Revendications

1. Silo à boues, en particulier à boues de curage, avec une partie servant à la réception des boues (12), une partie servant au chargement (16) située au-dessus de la partie servant à la réception des boues (12) et communiquant avec celle-ci via une ouverture d'admission à grande surface (14), avec un dispositif d'extraction des boues disposé dans la zone inférieure de la partie servant à la réception des boues (12) et pouvant être de préférence relié à un système de canalisations, et avec un dispositif de séparation des corps étrangers (18) disposé côté admission, **caractérisé en ce que** le dispositif de séparation des corps étrangers (18) est disposé dans la partie servant au chargement (16).

2. Silo selon la revendication 1, **caractérisé en ce que** le dispositif de séparation des corps étrangers (18) comporte une grille de criblage (20, 20', 20") couvrant l'ouverture d'admission (14) et au moins une contre-surface (22) disposée au-dessus de la grille de criblage, qui sont mobiles l'une par rapport à l'autre lors du passage des boues par compression à travers les ouvertures de criblage de la grille de criblage.

3. Silo selon la revendication 2, **caractérisé en ce que** le dispositif de séparation des corps étrangers (18) comporte au moins une ouverture d'évacuation des corps étrangers (24) disposée sur le côté de la grille de criblage (20, 20', 20") opposé à la partie servant à la réception des boues (12).

4. Silo selon la revendication 2 ou 3, **caractérisé en ce que** le dispositif de séparation des corps étrangers (18) comporte un cadre de chargement (28, 28') pouvant être chargé en boues et circonscrit par des parois relevées, qui est positionné ou peut être positionné entre la grille de criblage (20, 20') et la contre-surface (22) de telle sorte que la grille de criblage et la contre-surface peuvent être déplacées l'une par rapport à l'autre transversalement à l'ouverture du cadre.

5. Silo selon la revendication 4, **caractérisé en ce que** la contre-surface (22) est formée par la surface intérieure d'un clapet de silo (34) s'étendant sur la partie servant au chargement (16) et **en ce que** la grille de criblage (20) peut être déplacée dans la direction du clapet du silo (34) au moyen d'une commande de préférence hydraulique (32) à travers le cadre de chargement (28) fixé de façon solidaire au silo.

6. Silo selon la revendication 4 ou 5, **caractérisé en ce que** le dispositif de séparation des corps étrangers (18) comporte une barre à déblayer (40) mobile dans la direction de l'évacuation des corps étrangers parallèlement à la surface de la grille de criblage (20).

7. Silo selon l'une des revendications 2 à 4, **caractérisé en ce que** la grille de criblage (20') couvre de façon solidaire avec le silo l'ouverture d'admission (14) et **en ce que** la contre-surface (22) est disposée au niveau d'une plaque de compression (46) qui peut être déplacée à travers le cadre de chargement (28') d'en haut vers la grille de criblage (20') au moyen d'une commande de préférence hydraulique (32').

8. Silo selon la revendication 7, **caractérisé en ce que** le cadre de chargement (28'), ouvert vers le haut et vers le bas, peut être chargé en boues dans une station de remplissage (48) disposée à proximité de la grille de criblage (20') sur une assise (56) qui affleure avec la grille de criblage (20') et, de là, peut être déplacé dans la direction de la grille de criblage (20').

9. Silo selon la revendication 7 ou 8, **caractérisé en ce que** le cadre de chargement (28') peut, une fois relevée la plaque de compression (46), être déplacé par rapport à la grille de criblage (20') en direction de l'ouverture d'évacuation des corps étrangers (24).

10. Silo selon la revendication 9, **caractérisé en ce que** l'ouverture d'évacuation des corps étrangers (24) comporte une ouverture d'évacuation qui, au niveau de son bord, affleure avec la grille de criblage (20'), et au-dessus de laquelle le cadre de chargement ouvert par le fond (28') peut être déplacé.

11. Silo selon l'une des revendications 5 à 10, **caractérisé en ce que** la commande hydraulique comporte quatre vérins hydrauliques (32, 32') pouvant être actionnés simultanément et qui sont appliqués dans la zone de coin de la grille de criblage (20) ou, selon les cas, de la plaque de compression (46).

12. Silo selon l'une des revendications 1 à 3, **caractérisé en ce que** la contre-surface (22) est formée par une surface de raclement orientée obliquement dans la direction de la grille de criblage (20") d'au moins un strippeur (62) disposé de façon élastique contre la grille de criblage (20"), et **en ce que** la grille de criblage et le strippeur sont réciproquement mobiles parallèlement à la surface de la grille de criblage.

13. Silo selon la revendication 12, **caractérisé en ce que** la grille de criblage (20") peut être pivotée par rapport au dit au moins un strippeur (62) fixé de façon solidaire au silo.

14. Silo selon la revendication 12 ou 13, **caractérisé en ce qu'**au moins une poutre d'arrêt (72) est prévue, disposée au-dessus de la grille de criblage (20") à faible distance de celle-ci et orientée radialement.

15. Silo selon l'une des revendications 12 à 14, **caractérisé en ce que** la grille de criblage (20") est entourée d'une enceinte solidaire avec le silo (64), qui comporte au moins une ouverture formant l'ouverture d'évacuation des corps étrangers (24) et qui, de préférence, peut être fermée.

16. Silo selon l'une des revendications 2 à 15, **caractérisé en ce que** l'ouverture d'évacuation des corps étrangers (24) débouche dans une chambre servant au stockage des corps étrangers (26).

17. Silo selon la revendication 16, **caractérisé en ce que** la chambre servant au stockage des corps étranger (26) peut être alimentée en eau pour que les corps étrangers soient débarrassés de leur boue résiduelle, et **en ce qu'**elle est reliée à la partie servant à la réception des boues (12) via une voie de transport des boues résiduelles.
